# EUROPÄISCHE PATENTSCHRIFT

(11) **EP 2 619 335 B1**
(45) Veröffentlichungstag und Bekanntmachung des Hinweises auf die Patenterteilung: **17.12.2014**
(21) Anmeldenummer: 11760753.1
(22) Anmeldetag: 15.09.2011
(51) Int. Cl.: C21C 5/52, C21C 5/56, F27B 3/18, F27D 3/00, F27D 13/00

(54) **VORWÄRMVORRICHTUNG FÜR STAHLSCHROTT UND DAMIT AUSGESTATTETES METALLURGISCHES SCHMELZGEFÄSS**
PREHEATING APPARATUS FOR STEEL SCRAP AND METALLURGICAL MELTING VESSEL EQUIPPED THEREWITH
DISPOSITIF DE PRÉCHAUFFAGE POUR FERRAILLE D'ACIER ET RÉCIPIENT DE FUSION MÉTALLURGIQUE AINSI ÉQUIPÉ

(30) Priorität: 22.09.2010 DE 102010041209
(43) Veröffentlichungstag der Anmeldung: 31.07.2013
(73) Patentinhaber: Siemens Aktiengesellschaft, 80333 München (DE)
(72) Erfinder: BEILE, Hannes, 77955 Ettenheim (DE); DORNDORF, Markus, 76534 Baden-Baden (DE); HUBER, Hansjörg, 77694 Kehl (DE); KIESSNER, Christiane, 77694 Kehl (DE); KREUDER, Petra, 79183 Waldkirch (DE); KRIEG, Matthias, 77797 Ohlsbach (DE); MÜLLER, Alexander, 77652 Offenburg (DE); SCHALAST, Robert, 77731 Willstätt-Legelshurst (DE); SCHMID, Michael, 77781 Biberach/Baden (DE)
(86) Internationale Anmeldenummer: PCT/EP2011/066018
(87) Internationale Veröffentlichungsnummer: WO 2012/038320

(56) Entgegenhaltungen:
- EP-A1- 0 291 701
- WO-A1-98/07889
- WO-A1-99/28513
- WO-A1-03/019096

## Beschreibung

Die Erfindung betrifft eine Vorwärmvorrichtung für Stahlschrott und ein damit ausgestattetes metallurgisches Schmelzgefäß. Eine beispielsweise aus EP 0 711 397 A1 bekannte Vorwärmvorrichtung umfasst einen von einer Gehäusewand umgebenen, zur Aufnahme des Stahlschrotts dienenden vertikalen Schacht und wenigstens ein Verschlusselement, das mehrere parallel zueinander verlaufende seitlich voneinander beabstandete Finger aufweist. Das Verschlusselement ist zwischen einer Schließstellung und einer Öffnungsstellung beweglich gelagert. In der Schließstellung ragen dessen Finger zum Zwecke der Zurückhaltung von Stahlschrott zumindest teilweise in den Schacht hinein. Zwischen den Fingern strömen sich beim Erschmelzungsprozess bildende heiße Gase hindurch und wärmen den im Schacht vorhandenen Stahlschrott vor. In der Öffnungsstellung geben die Finger den Schacht zumindest so weit frei, dass der Stahlschrott aus dem Schacht heraus und in einen unterhalb des Schachtes positionierten Schmelzbehälter fallen kann.

Bei der bekannten Vorwärmvorrichtung sind zwei Verschlusselemente vorgesehen, wobei diese jeweils um eine in einem Randbereich des Schachtes erstreckende Schwenkachse nach Art eines zweiarmigen Hebels schwenkbar gelagert sind. Ausgehend von ihrer Schließstellung, in der sie in den Schacht hineinragen und Stahlschrott im Schacht zurückhalten, werden sie in ihre Öffnungsstellung gebracht, indem sie nach unten geschwenkt werden. Der Stahlschrott kann dann über eine Behälteröffnung in den Schmelzbehälter und in eine darin vorhandene Stahlschmelze gelangen. Die jeweils chargierten Mengen an Stahlschrott sind aus prozessökonomischen Gründen so groß, dass sich zunächst eine Säule aus Stahlschrott bildet, die sich gegebenenfalls nach oben bis in den Schwenkbereich der Verschlusselemente erstrecken kann. Bis in diesem Fall die Verschlusselemente wieder geschlossen werden können, muss daher so lange gewartet werden, bis sich die Höhe der Stahlschrottsäule infolge des Schmelzens von Stahlschrott an der Säulenbasis soweit verringert hat, dass die Verschlusselemente wieder nach oben in ihre Schließstellung geschwenkt werden können und eine neue Charge Stahlschrott zum Vorwärmen in den Schacht der Vorwärmvorrichtung eingebracht werden kann.

Die EP 0 291 701 A1 beschreibt einen Chargiergutvorwärmer zum Vorwärmen von Chargiergut eines metallurgischen Schmelzaggregates mit einem Behälter zur Aufnahme des Chargierguts, der einen Rost aus einzelnen Roststäben aufweist.

Aufgabe der Erfindung ist es, eine Vorwärmvorrichtung und ein damit ausgestattetes metallurgisches Schmelzgefäß anzugeben, die kürzere Prozesszeiten ermöglichen.

Diese Aufgabe wird hinsichtlich einer eingangs genannten Vorwärmvorrichtung gemäß Anspruch 1 gelöst, indem das wenigstens ein Verschlusselement so gelagert ist, dass es von der Seite des Schachtes her in diesen hinein verfahrbar und seitlich aus diesem heraus verfahrbar ist und zwischen seiner Schließ- und Öffnungsstellung eine Kreisbewegung ausführt, wobei die Drehachse für die Kreisbewegung des Verschlusselements mit Vertikalabstand oberhalb der Finger angeordnet ist und quer zu einer Vertikalebene des Schachtes verläuft, wobei die Finger mit nach oben weisender Konkavseite kreisringförmig gekrümmt sind und wobei die Drehachse den Krümmungsmittelpunkt bildet.

Hinsichtlich eines metallurgischen Schmelzgefäßes wird die Aufgabe durch ein Schmelzgefäß nach Anspruch 9 gelöst.

Im Gegensatz zu der bekannten Vorwärmvorrichtung, bei der das Verschlusselement in seiner Öffnungsstellung vollständig innerhalb des Schachtes angeordnet ist, ergibt sich bei der erfindungsgemäßen Ausgestaltung die Möglichkeit, das Verschlusselement in der Öffnungsstellung vorzugsweise vollständig aus dem Schacht zu entfernen und/oder seine Bewegungsbahn möglichst weit oben anzuordnen, so dass die Gefahr einer Blockade des Verschlusselements durch eine sich bei der Chargierung von Stahlschrott im Schmelzbehälter aufbauenden Säule verringert ist.

Vorteilhafte Ausgestaltungen der Vorwärmrichtung sind in den Unteransprüchen angegeben. Die Erfindung wird nun unter Bezugnahme auf die beigefügten Zeichnungen näher erläutert. Es zeigen:
- FIG 1: eine Vorwärmvorrichtung in perspektivischer Darstellung, wobei jedoch aus Gründen der Übersichtlichkeit ein von einer Gehäusewand umgrenzter, zur Aufnahme von Stahlschrott dienender Schacht weggelassen ist,
- FIG 2: einen metallurgischen Schmelzbehälter mit darüber positionierter Vorwärmvorrichtung, deren Verschlusselemente sich in der Schließstellung befinden,
- FIG 3: eine Abbildung entsprechend FIG 2, bei welcher sich jedoch die Verschlusselemente der Vorwärmvorrichtung in ihrer Öffnungsstellung befinden,
- FIG 4: eine stark schematisierte Draufsicht auf den Schmelzbehälter von FIG 2.

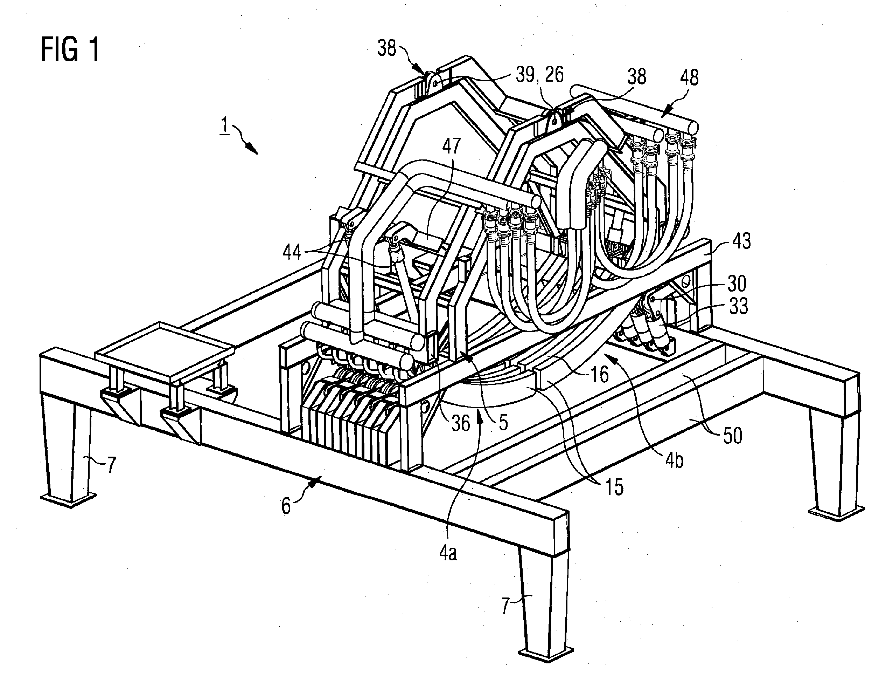

Die Vorwärmvorrichtung 1 umfasst einen von einer Gehäusewand 2 umgrenzten Schacht 3 (in FIG 1 nicht gezeigt), zwei Verschlusselemente 4a, 4b, ein Traggestell 5, an dem die Verschlusselemente 4a, 4b beweglich gelagert sind, sowie ein Basisgestell 6, an welchem das Traggestell 5 oberseitig angeordnet ist. Unterseitig sind am Basisgestell 6 vier Stützpfosten 7 angebracht. Wird ein metallurgisches Schmelzgefäß 8 mit einer Vorwärmvorrichtung 1 ausgerüstet, wird diese oberhalb des Schmelzgefäßes 8 angeordnet, wobei die Stützpfosten 7 das Schmelzgefäß 8 seitlich umgreifen und z.B. auf einem Fundament 9 aufliegen. Das Schmelzgefäß 8 ist in üblicher Weise ausgestaltet. An seiner Innenseite ist ein, eine Stahlschmelze 10 aufnehmender Bereich mit einer Feuerfestauskleidung 13 versehen. Es weist eine Chargieröffnung 14 auf, oberhalb welcher der Schacht 3 der Vorwärmvorrichtung 1 angeordnet ist. In das Schmelzgefäß 8 ragen Schmelzelektroden 11 hinein, die mit elektrischen Zuleitungen 12 versehen sind.

Die Verschlusselemente 4a, 4b umfassen als wesentliche, den Verschluss des Schachtes 3 bewirkende Teile etwa steg- oder stabförmig ausgebildete Finger 15. Die Finger 15 sind, wie FIG 1 zu entnehmen ist, quer zu ihrer Längserstreckung beabstandet, so dass zwischen ihnen ein Zwischenraum 16 vorhanden ist, durch welchen heiße Gase aus dem Schmelzgefäß 8 nach oben in den Schacht 3 vordringen und dort vorhandenen Schrott oder Stahlschrott (nicht gezeigt) erwärmen können.

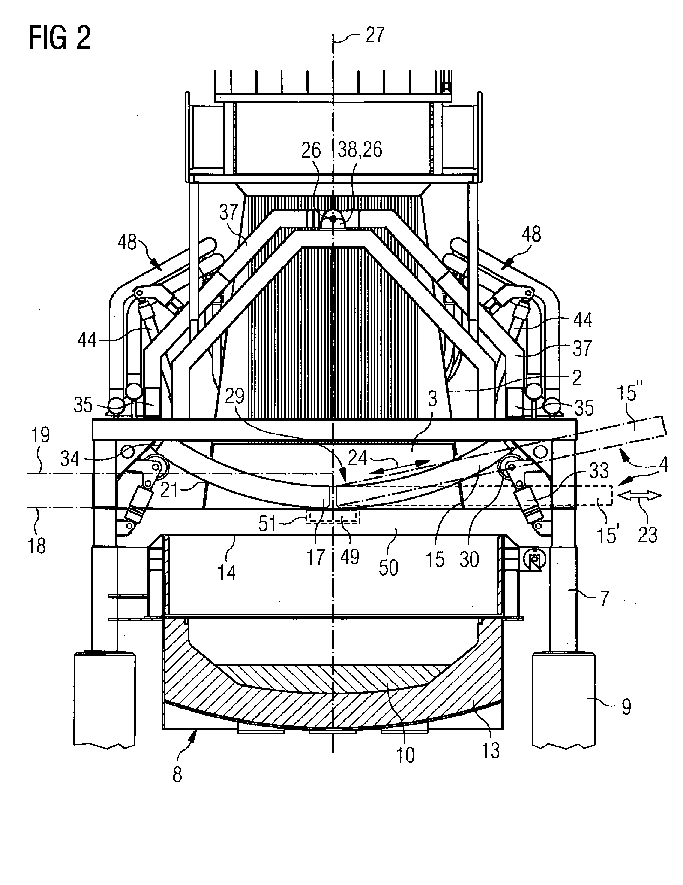

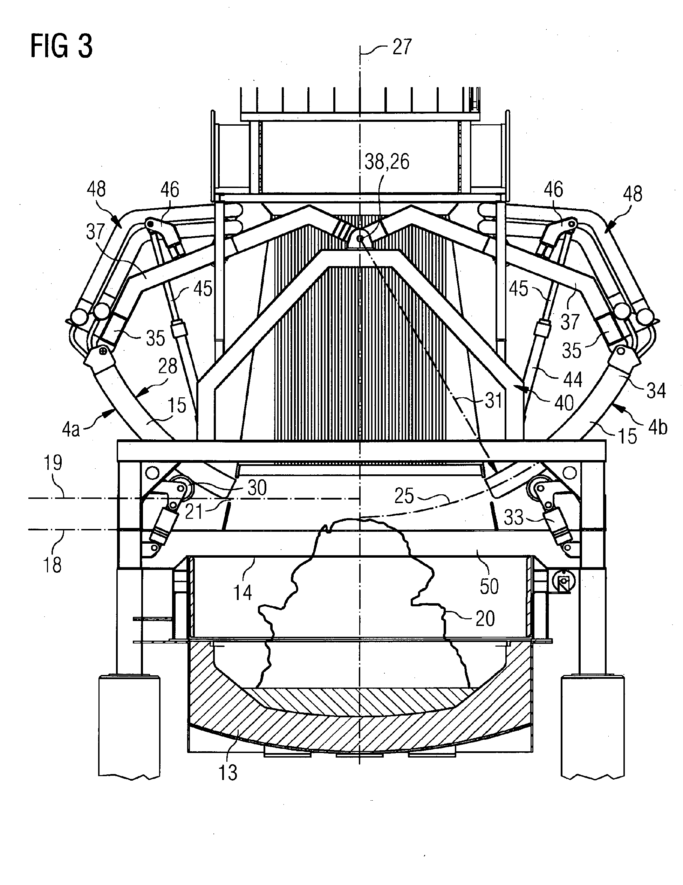

Wie FIG 2 und 3 zu entnehmen ist, sind die Verschlusselemente 4a, 4b zwischen einer Schließstellung (FIG 2) und einer Öffnungsstellung (FIG 3) beweglich und dabei seitlich in den Schacht 3 hinein- bzw. seitlich aus diesem heraus fahrbar. In ihrer Öffnungsstellung ragen sie dabei vorzugsweise nicht oder allenfalls in einem nicht erheblichen Ausmaß in den Schacht 3 hinein, so dass der Stahlschrott behinderungsfrei aus dem Schacht 3 herausfallen und in den Schmelzgefäß 8 hineingelangen kann. Für die Ausgestaltung und Lagerung der Verschlusselemente 4a, 4b oder auch eines einzelnen Verschlusselements steht eine Vielzahl von Möglichkeiten zur Verfügung. In allen Fällen zweckmäßig ist eine Ausgestaltung, bei der ein Verschlusselement 4a, 4b so gelagert und angeordnet ist, dass die in der Schließstellung in den Schacht 3 hineinragenden Freienden 17 der Finger 15 sich auf einem Höhenniveau 18 befindet, das gleich oder niedriger ist, als das von ihm in der Öffnungsstellung eingenommene Höhenniveau 19. Auf diese Weise ist gewährleistet, dass sich die Bewegungsbahn eines Verschlusselements 4, 4a, 4b auf einem Höhenniveau befindet, welches von einer sich beim Chargieren bildenden Säule 20 aus Schrott oder Stahlschrott in der Regel nicht erreicht wird.

Ein nicht erfindungsgemäßes Verschlusselement 4 kann beispielsweise Finger 15' in Form sich geradlinig erstreckender Stäbe oder Stege aufweisen, die in Horizontalrichtung 23 zwischen der Schließ- und der Öffnungsstellung verfahrbar sind. Denkbar, jedoch nicht erfindungsgemäß ist auch, dass ein Verschlusselement 4,so gelagert und ausgerichtet ist, dass seine Finger 15" eine in Richtung 24 schräg verlaufende, mit einer Vertikalachse 27 des Schachts 3 einen sich nach oben öffnenden Winkel einschließende Bewegungsbahn aufweist (siehe FIG 2).

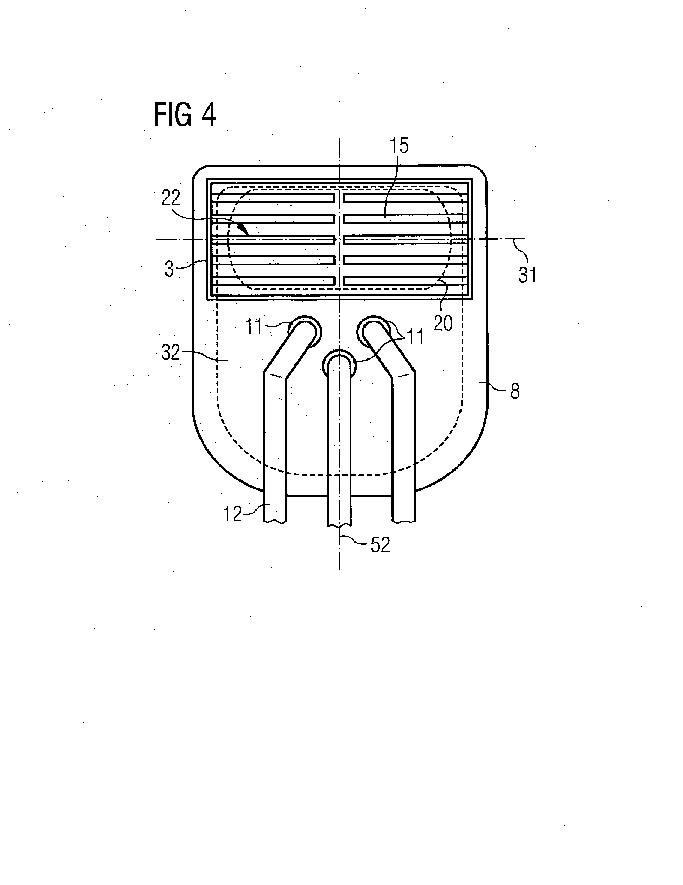

Erfindungsgemäß sind die Verschlusselemente 4a, 4b so gelagert, dass sich ihre Finger 15 auf einer Kreisbahn 25 bewegen. Dabei ist die Drehachse 26 für die Kreisbewegung mit Vertikalabstand oberhalb der Finger 15 angeordnet und verlaüft quer zu einer Vertikalachse 27 des Schachtes 3. Zum einen ist oberhalb der Verschlusselemente 4a, 4b in der Regel mehr Raum für die Anordnung eines Antriebs für die Verschlusselemente 4a, 4b vorhanden. Außerdem ergibt sich dadurch eine Öffnungscharakteristik des Verschlusselements 4a, 4b ähnlich wie bei einer Baggerschaufel. Insbesondere wenn zwei Verschlusselemente 4a, 4b wie bei dem gezeigten Ausführungsbeispiel vorhanden sind, wird bei symmetrischer Bewegung der Verschlusselemente 4a, 4b der Schrott oder Stahlschrott mittig aus dem Schacht 3 entlassen, so dass er mit im Wesentlichen vertikaler Fallrichtung in einen unterhalb des Schachts 3 vorhandenen exzentrischen Bereich 22 des Schmelzgefäßes 8 (FIG 4) fällt. Auf diese Weise ist verhindert, dass der Schrott oder Stahlschrott zu den Schmelzelektroden 11 hin verrutscht und diese beschädigt.

Vorteilhaft ist es dabei, wenn die Verschlusselemente 4, 4a, 4b so angeordnet sind, dass die Bewegungsbahn der Finger 15, 15', 15" der Verschlusselemente 4, 4a, 4b in einer Vertikalebene 31 verläuft, die sich quer zu einer sowohl den Bereich 22 als auch den die Schmelzelektroden 11 aufweisenden Behälterbereich 32 schneidenden Vertikalebene 52 erstreckt.

Alternativ ist es aber genauso möglich, dass mindestens ein, insbesondere genau ein Verschlusselement so angeordnet ist, dass die Bewegungsbahn der Finger des Verschlusselements senkrecht zur Vertikalebene 31 verläuft und sich somit parallel zur Vertikalebene 52 erstreckt.

Grundsätzlich kann ein Verschlusselement von jeder Seite des Schachtes 3 her in diesen hinein und seitlich aus diesem heraus fahrbar angeordnet sein. Die Anordnung eines einzelnen Verschlusselements auf einer den Schmelzelektroden 11 gegenüberliegenden Seite des Schachts 3 hat sich ebenso bewährt wie die Anordnung von zwei Verschlusselementen gemäß FIG 4.

Der Schacht 3 ist in der Draufsicht häufig rechteckig ausgebildet, wobei eine lange Seite des Rechtecks meist den Schmelzelektroden 11 zugewandt ist. Dadurch sind die Finger 15 eines Verschlusselements, das an der langen Seite des Rechtecks angeordnet ist, meist kürzer dimensionierbar als bei einem Verschlusselement, das an einer der kurzen Seiten des Rechtecks angeordnet ist. Die verkürzte Bauweise bringt Vorteile hinsichtlich der mechanischen Stabilität der Finger.

Um ein seitliches Verrutschen des Schrotts oder Stahlschrotts im Bereich 22 des Schmelzbehälters 8 zu verhindern, sind die Finger 15 mit nach oben weisender Konkavseite 28 kreisringförmig gekrümmt, wobei die Drehachse 26 den Krümmungsmittelpunkt bildet. Sollen die Finger 15 durch die Gehäusewand 2 des Schachtes 3 hindurch geführt werden, so ist aufgrund dieser Ausgestaltung darin jeweils lediglich eine Öffnung 21 erforderlich, deren Form und Größe im Wesentlichen der Querschnittsform eines Fingers 15 entspricht.

Die zwei Verschlusselemente 4a, 4b liegen sich gegenüber, wobei sie in der Schließstellung jeweils eine Hälfte des Schachtes 3 verschließen. Aufgrund der kreisringförmigen Krümmung der Verschlusselemente 4a, 4b bildet sich in der Schließstellung eine rinnenförmige Mulde 29, deren tiefste Stelle mittig im Schacht 3 verläuft. Beim Öffnen der Verschlusselemente 4a, 4b wird dadurch der Stahlschrott in einen zentralen Bereich des Schmelzgefäßes 8 geleitet.

Außerhalb des Schachtes 3 sind am Traggestell 5 Führungsrollen 30 angeordnet, welche mit Hilfe eines Federelements 33 gegen die Unterseite der Finger 15 gedrückt werden. Auf diese Weise werden die Finger 15 geführt und unterstützt.

Die Finger 15 sind mit ihren äußeren Enden 34 an einer in Richtung der Drehachse 26 verlaufenden leistenförmigen Traverse 35 fixiert. Mit den Enden 36 der Traverse 35 ist ein einarmiger Hebelarm 37 mit seinem einen Ende 41 verbunden. Die anderen Enden 42 zweier sich gegenüberliegender Hebelarme 37 sind an einem gemeinsamen Lager 38 schwenkbar gehalten, wobei dieses die Drehachse 26 etwa in Form eines Lagerzapfens 39 enthält. Die Lager 38 sind im Scheitelbereich eines bügelförmigen Gestells 40 angebracht, welches sich an einem quer zur Drehachse 26 verlaufenden Träger 43 des Traggestells 5 abstützt.

Beim Anheben und Absenken der Hebelarme 37, werden die Finger 15 zwischen ihrer Schließ- und Öffnungsstellung bewegt. Zu diesem Zweck sind jedem Verschlusselement 4a, 4b zwei Fluidzylinder 44 zugeordnet, welche in Richtung der Drehachse 26 voneinander beabstandet sind. Die Fluidzylinder 44 stützen sich mit ihrem unteren Ende am Traggestell 5 ab und sind mit den Freienden ihrer Kolbenstangen 45 mit einem Schwenklager 46 gelenkig verbunden. Die Schwenklager 46 wiederum sind an einer Traverse 47 (FIG 1) vorhanden, welche die zwei einem Verschlusselement 4a, 4b zugeordneten Hebelarme 37 miteinander verbindet. In der Schließstellung der Verschlusselemente 4a, 4b sind die Kolbenstangen 45 eingefahren (FIG 2). Durch Ausfahren der Kolbenstangen 45 werden die Hebelarme 37 angehoben und die Verschlusselemente 4a, 4b bzw. die Finger 15 auf einer Kreisbahn in ihre Öffnungsstellung bewegt.

Die Finger 15 sind innen hohl und sind im Betrieb von Kühlflüssigkeit durchströmt. Um dies zu gewährleisten ist an die Hebelarme 37 bzw. die Traversen 35 ein Leitungssystem 48 zur Zu- und Abführung von Kühlflüssigkeit fixiert.

Um die Beaufschlagung der Finger 15 in der Schließstellung mit der tonnenschweren Last des im Schacht 3 vorhandenen Stahlschrotts zu entlasten, ist ein Stützlager 49 vorhanden, an welchem die Freienden 17 der Finger 15 mit ihrer Unterseite in der Schließstellung anliegen. Das Stützlager 49 ist beispielsweise stab- oder stegförmig ausgestaltet und vorzugsweise durch eine translatorische Bewegung seitlich in den Schacht 3 hinein bzw. aus diesem heraus bewegbar. Das Stützlager 49 stützt sich seinerseits am Basisgestell 6, etwa an sich quer zur Drehachse 26 verlaufenden Horizontalstreben 50 ab und ist beispielsweise in einer zur Querschnittsform des Stützlagers 49 ausgestalteten Ausnehmung 51 in den Horizontalstreben 50 geführt.

Die in den Figuren dargestellten Ausführungsbeispiele stellen lediglich einige der möglichen Ausführungsformen der erfindungsgemäßen Vorwärmvorrichtung dar, die sich dem Fachmann im Lichte der Beschreibung, im Rahmen des Schutzumtanges der Patentansprüche, ohne weiteres erschließen.

## Patentansprüche

1. Vorwärmvorrichtung für in einen metallurgischen Schmelzbehälter (8) zu chargierenden Stahlschrott, mit einem von einer Gehäusewand (2) umgebenen, zur Aufnahme des Stahlschrotts dienenden vertikalen Schacht (3), und wenigstens einem, mehrere parallel zueinander verlaufende, seitlich voneinander beabstandete Finger (15) umfassenden, zwischen einer Schließstellung und einer Öffnungsstellung beweglich gelagerten Verschlusselement (4), dessen Finger (15) in der Schließstellung zum Zwecke der Zurückhaltung von Stahlschrott zumindest teilweise in den Schacht (3) hineinragen, und in der Öffnungsstellung den Schacht (3) zumindest so weit freigeben, dass der Stahlschrott aus dem Schacht (3) in den Schmelzbehälter (8) fallen kann, wobei das wenigstens eine Verschlusselement so gelagert ist, dass es von der Seite des Schachtes (3) her in diesen hinein und seitlich aus diesem heraus fahrbar ist, **dadurch gekennzeichnet, dass** es zwischen seiner Schließ- und Öffnungsstellung eine Kreisbewegung ausführt, wobei die Drehachse (26) für die Kreisbewegung des verschlusselements (4) mit Vertikalabstand oberhalb der Finger (15) angeordnet ist und quer zu einer Vertikalachse (27) des Schachts (3) verläuft und die Finger (15) mit nach oben weisender Konkavseite (28) kreisringförmig gekrümmt sind, wobei die Drehachse (26) den Krümmungsmittelpunkt bildet.

2. Vorwärmvorrichtung nach Anspruch 1, bei der das wenigstens eine Verschlusselement (4) so gelagert ist, dass sich das in der Schließstellung in den Schacht (3) hinein ragende Freiende (17) der Finger (15) auf einem Höhenniveau (18) befindet, das gleich oder niedriger ist als das von ihm in der Öffnungsstellung eingenommene Höhenniveau (19).

3. Vorwärmvorrichtung nach Anspruch 1 oder 2, bei der das wenigstens eine Verschlusselement (4) so gelagert ist, dass es zwischen seiner Schließ- und Öffnungsstellung eine translatorische Bewegung ausführt.

4. Vorwärmvorrichtung nach einem der vorhergehenden Ansprüche, bei der zwei sich diametral gegenüberliegende Verschlusselemente (4) vorhanden sind, die in der Schließstellung jeweils ein Hälfte des Schachtes (3) verschließen.

5. Vorwärmvorrichtung nach einem der vorhergehenden Ansprüche, bei der die Verschlusselemente (4) um eine gemeinsame, mittig im Schacht (3) verlaufende Drehachse(26) schwenkbar sind.

6. Vorwärmvorrichtung nach Anspruch 4 oder 5, bei der die Oberseiten der Verschlusselemente (4) konkav derart gekrümmt sind, dass sie in der schließstellung eine rinnenförmige Mulde (29) bilden, deren tiefste Stelle mittig im Schacht (3) verläuft.

7. Vorwärmvorrichtung nach einem der vorhergehenden Ansprüche, bei der wenigstens ein Stützlager (49) vorhanden ist, welches in der Schließstellung wenigstens eines Verschlusselements (4) in den Schacht (3) hineinragt und das Verschlusselement (4) an dessen Unterseite unterstützt.

8. Vorwärmvorrichtung nach Anspruch 7, bei der das Stützlager (49) so gelagert ist, dass es translatorisch in den Schacht (3) hinein und aus diesem heraus bewegbar ist.

9. Metallurgisches Schmelzgefäß mit einer oberseitigen Chargieröffnung (14) zum Einfüllen von Stahlschrott, wobei oberhalb der Chargieröffnung eine Vorwärmvorrichtung (1) mit einer Ausgestaltung nach einem der vorhergehenden Ansprüche angeordnet ist.

## Claims

1. Preheating apparatus for steel scrap which is to be charged into a metallurgical melting vessel (8), having a vertical shaft (3) which is surrounded by a housing wall (2) and is used to receive the steel scrap, and at least one closure element (4) which comprises a plurality of laterally spaced-apart fingers (15) extending parallel to one another, mounted so that it can move between a closed position and an open position, the fingers of which (15) in the closed position, for the purposes of holding back steel scrap, protrude at least partly into the shaft (3), and in the open position of the shaft (3) open at least wide enough for the steel scrap to be able to fall from the shaft (3) into the melting vessel (8), wherein the at least one closure element is supported so that it is able to be moved from the side of the shaft (3) into said shaft and sideways out of said shaft, **characterised in that** it performs a circular movement between its closed and its open position, wherein the axis of rotation (26) for the circular movement of the closure element (4) is disposed at a vertical distance above the fingers (15) and runs transverse to a vertical axis (27) of the shaft (3) and the fingers (15) are curved in a circular ring shape with a concave side (28) pointing upwards, wherein the axis of rotation (26) forms the central point of the curvature.

2. Preheating apparatus according to claim 1, in which the at least one closure element (4) is mounted so that, in the closed position, the free end (17) of the finger (15) projecting into the shaft (3) is at a height level (18) that is equal to or lower than the height level (19) assumed by it in the open position.

3. Preheating apparatus according to claim 1 or 2, in which the at least one closure element (4) is mounted so that it performs a translational movement between its closed and its open position.

4. Preheating apparatus according to one of the preceding claims, in which two diametrically-opposed closure elements (4) are present which, in the closed position, each close off one half of the shaft (3).

5. Preheating apparatus according to one of the preceding claims, in which the closure elements (4) are able to be pivoted around a common axis of rotation (26) running centrally in the shaft (3).

6. Preheating apparatus according to claim 4 or 5, in which the upper sides of the closure element (4) are curved in a concave manner such that, in the closed position, they form a trough-shaped recess (29), the lowest point of which runs centrally in the shaft (3).

7. Preheating apparatus according to one of the preceding claims, in which at least one support bearing (49) is present which, in the closed position of at least one closure element (4), protrudes into the shaft (3) and supports the closure element (4) on its underside.

8. Preheating apparatus according to claim 7, in which the support bearing (49) is supported so that it is able to be moved translationally into the shaft (3) and out of said shaft.

9. Metallurgical melting vessel with a charging opening (14) on its upper side for filling it with steel scrap, wherein a preheating apparatus (1) with an embodiment according to one of the preceding claims is disposed above the charging opening.

## Revendications

1. Dispositif de préchauffage pour de la ferraille d'acier à charger dans un récipient ( 8 ) métallurgique de fusion, comprenant un puits ( 3 ) vertical entouré d'une paroi ( 2 ) d'enveloppe et servant à la réception de la ferraille d'acier et au moins un élément ( 4 ) de fermeture, qui comprend plusieurs doigts ( 15 ) s'étendant parallèlement les uns aux autres et à distance latéralement les uns des autres, qui est monté mobile entre une position de fermeture et une position d'ouverture et dont les doigts ( 15 ) pénètrent, dans la position de fermeture, au moins en partie, dans le puits ( 3 ) pour retenir de la ferraille d'acier et, dans la position d'ouverture, peuvent dégager le puits ( 3 ) au moins si loin que la ferraille d'acier peut tomber du puits ( 3 ) dans le récipient ( 8 ) de fusion, le au moins un élément de fermeture étant monté de manière à pouvoir être déplacé à partir du côté du puits ( 3 ) dans celui-ci et en être sorti latéralement, **caractérisé en ce qu'**il exécute un mouvement circulaire entre sa position de fermeture et sa position d'ouverture, l'axe ( 26 ) de rotation de ce mouvement circulaire de l'élément ( 4 ) de fermeture étant à distance verticalement au-dessus des doigts ( 15 ) et s'étendant transversalement à un axe ( 27 ) vertical du puits ( 3 ) et les doigts ( 15 ) sont courbés en forme d'anneau de cercle en ayant le côté ( 28 ) concave tourné vers le haut, l'axe ( 26 ) de rotation formant le centre de courbure.

2. Dispositif de préchauffage suivant la revendication 1, dans lequel le au moins un élément ( 4 ) de fermeture est monté de manière à ce que l'extrémité ( 17 ) libre des doigts ( 15 ), pénétrant dans le puits ( 3 ) dans la position de fermeture, se trouve à un niveau ( 18 ) en hauteur, qui est le même ou qui est plus bas que le niveau ( 19 ) en hauteur qu'elle prend dans la position d'ouverture.

3. Dispositif de préchauffage suivant la revendication 1 ou 2, dans lequel le au moins un élément ( 4 ) de fermeture est monté de manière à exécuter un mouvement de translation entre sa position de fermeture et sa position de fermeture.

4. Dispositif de préchauffage suivant l'une des revendications précédentes, dans lequel il y a deux éléments ( 4 ) de fermeture opposés diamétralement, qui, dans la position de fermeture, ferment respectivement une moitié du puits ( 3 ).

5. Dispositif de préchauffage suivant l'une des revendications précédentes, dans lequel les éléments ( 4 ) de fermeture peuvent pivoter autour d'un axe ( 26 ) de rotation commun s'étendant au milieu du puits ( 3 ).

6. Dispositif de préchauffage suivant la revendication 4 ou 5, dans lequel les côtés supérieurs des éléments ( 4 ) de fermeture sont courbés de manière concave, de manière à former, dans la position de fermeture, une cuvette ( 29 ) en forme de goulotte, dont le point le plus bas est au milieu du puits ( 3 ).

7. Dispositif de préchauffage suivant l'une des revendications précédentes, dans lequel il y a au moins un palier ( 49 ) d'appui, qui, dans la position de fermeture d'au moins un élément ( 4 ) de fermeture, pénètre dans le puits ( 3 ) et soutient l'élément ( 4 ) de fermeture sur son côté inférieur.

8. Dispositif de préchauffage suivant la revendication 7, dans lequel le palier ( 49 ) d'appui est monté de manière à pouvoir se déplacer en translation en rentrant dans le puits ( 3 ) et en en sortant.

9. Récipient métallurgique de fusion ayant une ouverture ( 14 ) de chargement en haut pour l'introduction de ferraille d'acier, dans lequel un dispositif ( 1 ) de préchauffage, ayant une conformation suivant l'une des revendications précédentes, est disposé au-dessus de l'ouverture de chargement.
